# EUROPÄISCHE PATENTANMELDUNG

(11) **EP 1 582 542 A1**
(43) Veröffentlichungstag der Anmeldung: **05.10.2005**
(21) Anmeldenummer: 05005705.8
(22) Anmeldetag: 16.03.2005
(51) Int. Cl.: C08G 18/12, C08G 18/40, C08G 18/08, C08G 18/66, C09D 175/04

(54) **Wässrige Polyurethandispersionen**

(30) Priorität: 30.03.2004 DE 102004015430
(71) Anmelder: LANXESS Deutschland GmbH, 51369 Leverkusen (DE)
(72) Erfinder: Reiners, Jürgen, Dr., 51373 Leverkusen (DE); Hassel, Tillmann, Dr., 50259 Pulheim (DE); Kurek, Gerald, Dr., 51373 Leverkusen (DE)

(57) **Zusammenfassung**

Polyurethan, das erhalten wird durch Umsetzung von
a) einem NCO-haltigen Prepolymer, aufgebaut aus
   a1) wenigstens einem Polyesterpolyol, vorzugsweise Polycarbonatpolyol, carbonatgruppen-freies Polyesterpolyol, Polyestercarbonatpolyol, Polyesteramidpolyol, insbesondere Polyesterdiol, mit einem mittleren als Zahlenmittel bestimmten Molekulargewicht von größer gleich 500 g/mol, vorzugsweise von 500 bis 6000 g/mol, insbesondere von 500 bis 4000 g/mol, ganz besonders bevorzugt von 800 bis 4000 g/mol, und
   a2) wenigstens einem von a1) verschiedenen Polyetherpolyol, vorzugsweise Polyalkylenglykol wie Polyethylenglykol, Polypropylenglykol, Polytetramethylenglykol, Polyhexamethylenglykol sowie Mischpolyether, insbesondere solche enthaltend Bausteine aus der Gruppe Ethylenoxi, Propylenoxi, Tetramethylenoxi und/oder Hexamethylenoxi, mit einem als Zahlenmittel bestimmten Molekulargewicht von größer gleich 500, vorzugsweise von 500 bis 10 000 g/mol, insbesondere von 500 bis 4 000, besonders bevorzugt von 800 bis 4 000 g/mol, vorzugsweise ein Polyetherdiol und
   a3) wenigstens einem Polyol, insbesondere Diol, mit einem Molekulargewicht von kleiner 500 g/mol, das eine oder mehrere ionische Gruppen und/oder eine oder mehrere patentiell ionische Gruppen trägt, vorzugsweise eine oder mehrere Carboxylatgruppen trägt und
   a4) wenigstens einem aliphatischen Polyisocyanat, vorzugsweise Diisocyanat, vorzugsweise mit einem Molgewicht kleiner 500 g/mol, insbesondere von 112 bis 400 g/mol, besonders bevorzugt 168 bis 262 g/mol und
   a5) gegebenenfalls ein nicht-ionisches, Polyol, vorzugsweise Diol mit einem Molekulargewicht von kleiner 500 g/mol, vorzugsweise von 61 bis 499 g/mol, und
   a6) gegebenenfalls einem Monoalkohol
   mit
b) wenigstens einem gegenüber NCO-Gruppen reaktiven Polysiloxan mit einem als Zahlenmittel bestimmten Molgewicht von kleiner 1500 g/mol, vorzugsweise mit 1 bis 6, insbesondere 1 bis 3 gegenüber NCO-Gruppen reaktiven Amino- und/oder Hydroxylgruppen, insbesondere Aminogruppen und
c) wenigstens einem gegenüber NCO-Gruppen reaktiven Amin mit einer mittleren Amino-Funktionalität von 1 bis 6 und einem Molgewicht von kleiner 500 g/mol (als Zahlenmittel bestimmtes Molgewicht) das durch Hydroxylgruppen und/oder Sulfogruppen und/oder Carboxylgruppen substituiert sein kann und
d) Wasser,
wobei das Molverhältnis der zur Herstellung von dem Prepolymeren a) eingesetzten Hydroxyfunktionellen Verbindungen zum Polyisocyanat 1:1,1 bis 1:2,5, vorzugsweise 1,1;1 bis 1:1,7 beträgt.

## Beschreibung

Die Erfindung betrifft Polyurethandispersionen, welche gegenüber Isocyanaten reaktive Polysiloxan-Bausteine enthalten, ein Verfahren zu ihrer Herstellung und ihre Verwendung zur Beschichtung von Leder.

Es sind bereits zahlreiche Bindemittel auf Polyurethanbasis für die wässrige Beschichtung, insbesondere die Zurichtung von Ledern bekannt.

Mit Hilfe einer geeigneten Zurichtung sind Lederartikel gemäß modischer Trends herstellbar. Neben den ästhetischen Aspekten hat die Zurichtung eine Schutzfunktion und dient der Werterhaltung des Leders sowie der Verbesserung der Gebrauchstüchtigkeit. Unter Zurichtung wird das Auftragen von Bindemitteln, Farbstoffen, Pigmenten, Wachsen, Griffmitteln und weiteren Hilfsmitteln, mittels der üblichen Auftragstechniken wie Spritzen, Drucken, Gießen, Rakeln, Plüschen auf die gegerbte Haut verstanden. Dieses Auftragen kann in einer Schicht erfolgen, wird aber in der Regel in mehreren Schichten durchgeführt, wobei weitere Prozessschritte wie Zwischentrocknen, Bügeln, Prägen, Millen in der Praxis üblich sind. Nach jeder Applikation einer Zurichtschicht sollten die Leder normalerweise stapelbar sein. Dies ist nur möglich, wenn die frisch applizierte Zurichtschicht nach dem Trocknen nicht klebt. Die technischen Möglichkeiten zur Trocknung eines wässrigen Zurichtauftrags auf Leder sind limitiert; es können nur 90°C bis - kurzzeitig - 100°C erreicht werden, weil sonst die Schrumpftemperatur des Leders überschritten wird. Die Trockenzeit in einem Trockenkanal ist aus Gründen der Produktivität möglichst kurz und die Trockentemperatur wegen der Schrumpftemperatur des Leders niedrig.

Wegen dieser Limitierungen werden in der wässrigen Zurichtung von Leder Polymerdispersionen eingesetzt, die nach dem Auftrocknen einen klebfreien, mechanisch belastbaren Zurichtfilm liefern.

Die gesamte Lederzurichtung besteht in der Regel aus einem den Narben möglichst wenig belastenden Mehrschichtaufbau, wobei beispielsweise folgende Schichten auf das Leder aufgebracht werden: Vorgrundierung, Grundierung, ggf. pigmentierte Zwischenschicht und Deckschicht (Topcoat). Im Bedarfsfall wird nach der Grundierung das gewünschte Narbenbild für einen bestimmten Lederartikel aufgeprägt. Die Grundierung soll als Zwischenschicht unter dem Topcoat für eine gute Haftung zwischen Substrat und Topcoat sorgen und dient zur Vorbereitung der Oberfläche für den Endauftrag. Neben dieser guten Haftung sind gute Knick- und Hydrolyseechtheiten der Zurichtung sowie Prägbarkeit der grundierten Substrate von entscheidender Bedeutung. Als Grundierbinder werden daher Binder verlangt, deren Filme sehr weich sind, aber dennoch nicht kleben dürfen. Besonders beim Prägen unter Druck / Temperatur dürfen die beschichteten Leder nicht an der Prägeplatte haften, was den Arbeitsablauf stören oder im Extremfall sogar die Zurichtschicht zerstören würde. Andererseits soll das aufgeprägte Narbenmuster ein möglichst genaues Abbild des Musters auf der Prägeplatte darstellen und sollte das natürliche Narbenbild möglichst genau treffen. Ein rundes Narbenkorn wird in der Regel gewünscht, weil es dem natürlichen Erscheinungsbild eines Vollnarbenleders am nächsten kommt. Die Prägung sollte daher nicht zu scharf bzw. zu kantig sein und sollte die Binderschicht nicht durchschneiden. In diesem Fall würde die Zurichtung später bei mechanischer Beanspruchung sehr leicht aufbrechen. Eine wichtige Eigenschaft von Grundierbindern sind auch gute Verlaufseigenschaften der wässrigen Dispersionen auf dem Crustleder und die Ausbildung eines geschlossenen und klebfreien Films während des Trocknungsvorgangs. Das einmal erzeugte Prägebild soll trotz der thermischen Belastung, denen das Leder während der weiteren Verarbeitung (Trocknung des Topcoats, Bügeln oder Millen) ausgesetzt ist, nicht leiden. Die Prägung sollte zum Beispiel durch die Applikation eines Topcoats sowie beim Bügeln oder beim Millen nicht an Konturenschärfe verlieren.

Bekannte wässrige Grundierungen haben jedoch wesentliche Nachteile: Beispielsweise ist der Verlauf oft nicht optimal, die Bildung eines geschlossenen Films ist erschwert. In der technischen Zurichtung wird versucht, diese Nachteile durch Zugabe von Verlaufshilfsmitteln zu kompensieren. Ein guter Verlauf und optimale Filmbildung der Bindemittel eines Zurichtsystems sind essentiell zur Erlangung des geforderten Aspektes und Echtheitsniveaus der Zurichtung. Das gilt besonders auch für die oberste Zurichtschicht, den sogenannten Topcoat. Ein entscheidender Nachteil ist bei manchen Grundierungen auch die mangelnde Hydrolysebeständigkeit oder eine zu geringe Zwischenschichtenhaftung.

Als Grundierungen werden meist Polymerdispersionen eingesetzt. Polyurethandispersionen liefern hierbei Grundierungen mit besonders guten Echtheiten, insbesondere Hydrolyse-, Reib- und Trocken- Nass- und Kälte-Knickechtheiten. Die bisher eingesetzten Polyurethandispersionen ergeben Filme, die entweder sehr weich und daher zu klebrig sind oder zu hart eingestellt sind, was die Zwischenschichtenhaftung verschlechtert. Auch die Prägbarkeit, das heißt das Verhalten während des eigentlichen Prägevorgangs, und das Prägeverhalten, das heißt die Abbildungsgenauigkeit und das Verhalten der Prägung bei der weiteren Verarbeitung sind noch verbesserungsbedürftig.

Das Haften an der Prägeplatte beim eigentlichen Prägevorgang kann zum Beispiel dadurch verhindert werden, dass man abhäsiv wirkende Zusätze wie Siliconöle vom Typ der Polydimethylsiloxane in den Spritzansatz mit dem Grundierbinder einmischt und diese gemeinsam auf das Leder aufbringt. Nachteil dabei ist, dass nur sehr kleine Mengen an Silicon vorhanden sein dürfen, da andernfalls sehr starke Verlaufsstörungen auftreten. Außerdem können die Silicone aus der Zurichtung migrieren und einen unerwünschten fettigen Griff verursachen, Fogging-Probleme verursachen oder einfach nur dadurch stören, dass sie andere Oberflächen kontaminieren und dort weitere Schäden verursachen.

Da Silicone bekanntlich sehr stark abhäsiv oder hydrophobierend wirkende Eigenschaften aufweisen, wird der Folgeauftrag eines Topcoats, beispielsweise einer wässrigen Polyurethan-Dispersion, durch Verlaufsstörungen behindert oder sogar unmöglich gemacht. Außerdem kann selbst bei erfolgreichem Auftrag des Topcoats und anschließender Trocknung trotz der eingesetzten Vernetzer die Zwischenhaftung so schlecht sein, dass der Film Topcoats im Abreißtest großflächig von der Grundierschicht abgezogen werden kann. Für den Endanwender sind solche Leder völlig unbrauchbar.

Polyurethan-Dispersionen mit guter Prägbarkeit besitzen in der Regel relativ weiche Filme. Grundierbinder besitzen in der Regel eine Härte Shore A unter 60. Noch weichere Grundierbinder mit einer Härte Shore A von 30 bis 50 sind wünschenswert, die beschichteten Leder neigen aber zum Kleben und lassen sich bei der Verarbeitung nicht übereinander stapeln. Man kann in solchen Fällen die Klebrigkeit zum Beispiel durch Einsatz von Wachsen oder Siliconölen in der Zuricht-Formulierung vermindern, erzeugt damit aber möglicherweise andere Probleme: So ist das Risiko einer schlechten Haftung des Topcoats auf der Grundierschicht sehr hoch. Außerdem ist für Automobilleder das Fogging ein ernstes Problem. Daher sind niedermolekulare Zusätze zu minimieren.

Polyurethandispersionen werden in der wässrigen Zurichtung von Leder nicht oder nur in Ausnahmefällen gemeinsam mit Polydimethylsiloxan-Additiven als Antiklebemittel eingesetzt, weil derartige Produkte nach dem Auftrocknen zu Verlaufsstörungen (fish eyes, Kraterbildung, Inselbildung) führen können, was für den technischen Einsatz prohibitiv ist oder weitere Verlaufshilfsmittel erfordert, um einige dieser Nachteile ausgleichen zu können.

Es sind bereits siliconmodifizierte Polyurethan-Dispersionen bekannt, bei denen ein Polysiloxanbaustein in die Polyurethankette eingebaut ist.

Aus WO 00/0064971 (= EP-A-1192214) sind siloxanhaltige Polyurethan-harnstoff Elastomer-Kompositionen bekannt, bei denen Amin-Kettenverlängerer wie 1,3-bis(3-aminopropyl)tetramethyl-disiloxan eingesetzt werden. Es werden keine Polyurethan-Dispersionen beschrieben.

WO 99/058100 (= EP-A-1077669) beschreibt filmbildende Polymere auf Basis von siliconmodifizierten -Polyurethanen zur Verwendung in Haarfestigern. Ein Polysiloxandiamin (Tegomer® A-Si 2122) wird als Kettenverlängerer verwendet. Es handelt sich dabei um ein Mehrkomponentensystem, das sich leicht aus dem Haar auswaschen lässt. Solche Produkte sind für die Lederzurichtung nicht geeignet.

Einen ähnlichen Erfindungsgegenstand beansprucht die EP-A-938889. Auch hier geht es um eine Polyurethandispersion, die als Haarfestiger eingesetzt und durch Auswaschen entfernt werden kann.

EP-A-841358 beschreibt Siloxan-modifizierte Polyurethane, die sich zur Herstellung von Lackledern eignen. Es handelt sich dabei um lösemittelhaltige Systeme die Polyurethane enthalten, die durch Reaktion von Polyisocyanaten mit hydroxylterminierten Poly(dimethylsiloxanen) erhalten werden.

In EP-A-1354902 sind wässrige Polysiloxan-Polyurethan-Dispersionen und ihre Verwendung in Beschichtungsmitteln beschrieben, insbesondere für den Einsatz als Soft-Feel-Lacke. Es werden bestimmte Polydimethylsiloxandiole mit einem Molekularmassenbereich 1500 bis 10000 g/mol in einer Menge von 3 bis 25 % bezogen auf Polyurethan-Feststoff eingebaut. Als geeignete Polysiloxandiole werden Tegomer® H-Si 2111, Tegomer® H-Si 2311 oder Tegomer® H-Si 6440 von Goldschmidt AG bevorzugt.

Die WO-A-03/091349 beschreibt wässrige Beschichtungs-Kompositionen zur Herstellung von Dichtungen, bestehend aus wenigstens einem vernetzbaren Binder auf Polyurethanbasis, gegebenenfalls einem Vernetzer, sowie sphärischen Partikeln von Polysilsesquioxanen.

Die WO-A-01/16200 beschreibt kosmetische Mittel, insbesondere Haarbehandlungsmittel, auf Basis von Urethan- und/oder Harnstoffgruppen enthaltenden Oligomeren und Polymeren, die als Baustein Polysiloxane mit mindestens zwei aktiven Wasserstoffatomen pro Molekül enthalten. Das Herstellung beinhaltet jedoch eine separate Herstellung eines hydroxyfunktionellen-Oligomers, welches den Polysiloxanbaustein enthält. Beispielsweise wird ein Überschuss eines Polysiloxandiols (Tegomer® H-Si 2122) mit einem Diisocyanat umgesetzt und dieses Gemisch mit anderen Polyolen zu Polyurethanen, die auch wasserdispergierbar sein können, umgesetzt. Eine Eignung dieser Produkte für die Lederzurichtung ist wegen der komplexen Anforderungen nicht sinnvoll. So werden die mechanischen Eigenschaften und die Hydrolyse, die in der Lederzurichtung gefordert werden, nicht erreicht.

Die WO-A-02/ 12364 beschreibt Polyurethan (Polymer Hybrid)-Dispersionen mit verringerter Hydrophilie und ihre Verwendung in Bindemitteln u.a. zur Herstellung von Bodenbelägen. Die Polyurethan-Dispersionen enthalten ein hydrophob modifiziertes Blockcopolymer, das aus hydrophoben Segmenten wie zum Beispiel Polybutylenoxid, Polydodecyloxid usw. und Polypropylenoxid-Segmenten besteht. In der Aufzählung von hydrophoben Segmenten sind auch α,ω-Polymethäcrylatdiole (Tegodiol), α,ω-Dihydroxyalkyl-polydimethylsiloxane erwähnt.

Es wird daher weiterhin nach verbesserten Polyurethan-Dispersionen gesucht, die die oben genannten Anforderungen erfüllen. Aufgabe der vorliegenden Erfindung war es, die erwähnten Nachteile der bekannten Produkte zu beheben. Insbesondere sollen die Polyurethandispersionen eine möglichst hohe Festigkeit bei geringer Härte besitzen und zu weichen, gut haftenden, aber dennoch klebfreien Filmen auftrocknen.

Überraschenderweise wurden nun das nachfolgend beschriebene Polyurethan gefunden.

Gegenstand der Erfindung ist ein Polyurethan, das erhalten wird durch Umsetzung von
a) einem NCO-haltigen Prepolymer, aufgebaut aus
   a1) wenigstens einem Polyesterpolyol, vorzugsweise Polycarbonatpolyol, carbonatgruppen-freies Polyesterpolyol, Polyestercarbonatpolyol, Polyesteramidpolyol, insbesondere Polyesterdiol, mit einem mittleren als Zahlenmittel bestimmten Molekulargewicht von größer gleich 500 g/mol, vorzugsweise von 500 bis 6000 g/mol, insbesondere von 500 bis 4000 g/mol, ganz besonders bevorzugt von 800 bis 4000 g/mol, und
   a2) wenigstens einem von a1) verschiedenen, vorzugsweise Estergruppen-freien Polyetherpolyol, vorzugsweise Polyalkylenglykol wie Polyethylenglykol, Polypropylenglykol, Polytetramethylenglykol, Polyhexamethylenglykol sowie Mischpolyether, insbesondere solche enthaltend Bausteine aus der Gruppe Ethylenoxi, Propylenoxi, Tetramethylenoxi und/oder Hexamethylenoxi, mit einem als Zahlenmittel bestimmten Molekulargewicht von größer gleich 500, vorzugsweise von 500 bis 10 000 g/mol, insbesondere von 500 bis 4 000, besonders bevorzugt von 800 bis 4 000 g/mol, vorzugsweise ein Polyetherdiol und
   a3) wenigstens einem Polyol, insbesondere Diol, mit einem Molekulargewicht von kleiner 500 g/mol, das eine oder mehrere ionische Gruppen und/oder eine oder mehrere potentiell ionische Gruppen trägt, vorzugsweise ein oder mehrere Carboxylatgruppen trägt und
   a4) wenigstens einem aliphatischen Polyisocyanat, vorzugsweise Diisocyanat, vorzugsweise mit einem Molgewicht kleiner 500 g/mol, insbesondere von 112 bis 400 g/mol, besonders bevorzugt 168 bis 262 g/mol und
   a5) gegebenenfalls ein nicht-ionisches Polyol, vorzugsweise Diol mit einem Molekulargewicht von kleiner 500 g/mol, vorzugsweise von 61 bis 499 g/mol, und
   a6) gegebenenfalls einem Monoalkohol
   mit
b) wenigstens einem gegenüber NCO-Gruppen reaktiven Polysiloxan mit einem als Zahlenmittel bestimmten Molgewicht von kleiner 1500 g/mol, vorzugsweise mit 1 bis 6, insbesondere 1 bis 3 gegenüber NCO-Gruppen reaktiven Amino- und/oder Hydroxylgruppen, insbesondere Aminogruppen und
c) wenigstens einem gegenüber NCO-Gruppen reaktiven Amin mit einer mittleren Amino-Funktionalität von 1 bis 6 und einem Molgewicht von kleiner 500 g/mol (als Zahlenmittel bestimmtes Molgewicht), das durch Hydroxylgruppen und/oder Sulfogruppen und/oder Carboxylgruppen substituiert sein kann und
d) Wasser,
wobei das Molverhältnis der zur Herstellung von dem Prepolymeren a) eingesetzten Hydroxyfunktionellen Verbindungen zum Polyisocyanat 1 : 1,1 bis 1 : 2,5, vorzugsweise 1,1 : 1 bis 1 : 1,7 beträgt.

Das erfindungsgemäße Polyurethan besitzt vorzugsweise ein als Zahlenmittel bestimmtes mittleres Molekulargewicht von 5 000 bis 50 000, vorzugsweise von 7 000 bis 40 000, besonders bevorzugt von 8 000 bis 30 000 g/mol.

Gegenstand der Erfindung ist weiterhin eine Polyurethandispersion, vorzugsweise wässrige Polyurethandispersion, enthaltend insbesondere 10 bis 60 Gew.-% des erfindungsgemäßen Polyurethans, besonders bevorzugt 25 bis 50 Gew.-%, bezogen auf die Dispersion.

### Prepolymer a)

Im Allgemeinem besitzen die Polyole a1) und a2) keine ionischen Gruppen bzw. potentielle ionische Gruppen, wenn man einmal von endständigen Carbonsäuregruppen in Polyesterpolyolen absieht, die anteilig bei deren Herstellung nicht immer zu vermeiden sind.

Als geeignetes Polyesterpolyol der Komponente a1) können eingesetzt werden: Carbonatgruppenfreie Polyester, Polycarbonate, Polyestercarbonate und Polyesteramidpolyole des Molekulargewichtsbereichs 500 bis 6 000 g/mol.

Als solche sind beispielsweise zu nennen: Umsetzungsprodukte von mehrwertigen, vorzugsweise zweiwertigen Alkoholen mit vorzugsweise zweiwertigen Carbonsäuren. Anstelle der Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein. Als Beispiele hierfür seien genannt: Bernsteinsäure, Bernsteinsäureanhydrid, Adipinsäure, Glutarsäure, Korksäure, Azelainsäure, Sebacinsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure, Ölsäure, Terephthalsäuredimethylester, Terephthalsäure-bis-glykolester.

Als mehrwertige Alkohole zur Herstellung der Polyester kommen z.B. Ethylenglykol, Propylenglykol-(1,2) und -(1,3), Butylenglykol-(1,4), -(1,3) und -(2,3), Hexandiol-(1,6), Octandiol-(1,8), das durch Reduktion von Dimerfettsäure erhaltene Diol, Neopentylglykol, Cyclohexandimethanol, 2-Methyl-1,3-propandiol, ferner Diethylenglykol, Triethylenglykol, Tetraethylenglykol, Polyethylenglykol, Dipropylenglykol, Polypropylenglykol, Dibutylenglykol und Polybutylenglykol in Frage. Die Polyester können anteilig endständige Carboxylgruppen aufweisen. Auch Polyester aus Lactonen, insbesondere Caprolacton, sind einsetzbar.

Bei den besonders bevorzugten Polyesterpolyolen, insbesondere Polyesterdiolen handelt es sich um Dicarbonsäurepolyesterpolyole, deren Dicarbonsäure-Komponente zu mindestens 50 Carboxyläquivalent-%, besonders bevorzugt ausschließlich aus Adipinsäure und deren Polyol-Komponente vorzugsweise zu mindestens 50 Hydroxyäquivalent-%, aus 1,4-Dihydroxybutan, 1,6-Dihydroxyhexan oder Neopentylglykol bestehen.

Auch Hydroxylgruppen aufweisende Polycarbonate kommen als Komponente a1) oder als Bestandteil der Komponente a1) in Betracht, z.B. solche, die durch Umsetzung von Diolen wie Propandiol-(1,3), Butandiol-(1,4) und/oder Hexandiol-(1,6), das durch Reduktion von Dimerfettsäure erhaltene Diol, Neopentylglykol, Diethylenglykol, Triethylenglykol, Tetraethylenglykol mit Dicarbonaten, z.B. Diphenylcarbonat, Dimethylcarbonat, Diethylcarbonat oder Phosgen, hergestellt werden können. Die Polycarbonate können anteilig auch Estergruppen enthalten, die durch Einbau von Lactonen, insbesondere Caprolactondiol, während der Kondensation entstehen können-Beliebige Gemische der beispielhaft genannten Polyhydroxylverbindungen können ebenfalls als Komponente a1) verwendet werden.

Besonders bevorzugt sind zu nennen:

Dihydroxypolyester aus Dicarbonsäuren bzw. deren Anhydriden, z.B. Adipinsäure, Bernsteinsäure, Phthalsäureanhydrid, Isophthalsäure, Terephthalsäure, Korksäure, Azelainsäure, Sebacinsäure, Tetrahydrophthalsäure, Maleinsäureanhydrid, Dimerfettsäuren und Diolen, z.B. Ethylenglykol, Propylenglykol, 1,4-Propandiol, Diethylenglykol, Triethylenglykol, Butandiol-1,4, Hexandiol-1,6, Trimethylenpentandiol, Cyclohexandiol-1,4, Cyclohexandimethanol-1,4, Neopentylglykol, Octandiol-1,8, Dimerdiol; Polyester und Polycarbonate auf Lacton-, insbesondere ε-Caprolactonbasis, Polycarbonate, wie sie durch Umsetzung beispielsweise der oben genannten Diole mit Diaryl- oder Dialkylcarbonaten oder Phosgen zugänglich sind.

Geeignete Komponenten a2) sind Polyetherpolyole, wie sie z.B. unter Verwendung von niedermolekularen Polyolen, vorzugsweise Diolen oder Wasser als Startermolekül durch Polymerisation von Ethylenoxid und/oder Propylenoxid erhalten werden können. Als Starteralkohole eignen sich üblicherweise Ethylenglykol, 1,2-Propandiol, 1,3-Propandiol, 1,4-Butandiol, 1,6-Hexandiol, Glycerin, Glucose, Sorbit, Trimethylolpropan, Pentaerythrit, sowie entsprechende Oligoether, die durch Anlagerung von Ethylenoxid und/oder Propylenoxid an diese Polyole entstehen. Besonders bevorzugt sind auch Polyether, die eine besonders enge Molekulargewichtsverteilung und keine durch Nebenreaktionen gebildeten Endgruppen aufweisen, wie beispielsweise die streng bifunktionellen Propylenoxid-polyether, die mittels sog. DMC (Doppelmetallcyanid)-Katalysatoren zugänglich sind.

Es eignen sich ebenfalls die durch Polymerisation von Tetrahydrofuran erhaltenen Polyether sowie Mischpolyether, die aus Monomeren aus der Gruppe Tetrahydrofuran, Ethylenoxid und/oder Propylenoxid mit statistischem oder blockartigen Sequenzen in der Polymerkette aufgebaut sind.

Besonders geeignete Polyole der Komponente a1) sind Polycarbonatdiole, Polyestercarbonatdiole und solche der Komponente a2) sind Polytetrahydrofurandiole.

Von diesen besonders geeigneten Polyolen sind Hexandiol-polycarbonatdiole und/oder Caprolacton-Hexandiol-polycarbonatdiole als Komponente a1) und Polytetrahydrofurandiole als Komponente a2) bevorzugt, insbesondere solche des Molmassenbereiches 1000 bis 3000 g/mol.

Als ionisch bzw. potentiell ionische Gruppen-tragendes Diol der Komponente a3) kommen insbesondere Carbonsäure- bzw. Carboxylatgruppen-tragende Diole in Frage wie beispielsweise 2,2-Bis(hydroxymethyl)alkancarbonsäuren wie Dimethylolessigsäure, 2,2-Dimethylolpropionsäure, 2,2-Dimethylolbuttersäure, 2,2-Dimethylolpentansäure sowie Dihydroxybernsteinsäure.

Bevorzugt wird Dimethylolpropionsäure verwendet.

Geeignete aliphatische Isocyanate der Komponente a4) sind beispielsweise Isocyanate wie z.B. Hexamethylendiisocyanat, Butylendiisocyanat, Isophorondiisocyanat, 1-Methyl-2,4(2,6)-diisocyanatocyclohexan, Norbornylendiisocyanat, Xylylen-diisocyanat, Tetramethylxylylendiisocyanat, Hexahydroxyxylylendüsocyanat sowie 4,4'-Diisocyanatodicyclohexylmethan.

Vorzugsweise werden 4,4'-Diisocyanatodicyclohexylmethan und/oder Isophorondiisocyanat und/oder Hexamethylendiisocyanat und/oder 1-Methyl-2,4(2,6)-diisocyanatocyclohexan eingesetzt. Außerdem sind auch höherfunktionelle Polyisocyanate geeignet, sogenannte Lackpolyisocyanate, wie Dimerisate oder Trimerisate von Hexamethylendiisocyanat oder Isophorondiisocyanat, 1,3-Bis(6-isocyanatohexyl)-5-oxa-1,3-diazin-2,4,6-trion, sowie Carbodiimidgruppen, Allophanatgruppen oder Biuretgruppen enthaltende Isocyanate, die auf Basis von Hexamethylendiisocyanat hergestellt werden können.

Als bevorzugte Polyole, insbesondere Si-freie Polyole, vorzugsweise Diole der Komponente a5) kommen in Frage: Ethylenglykol, 1,4-Butandiol, 1,6-Hexandiol, Neopentylglykol, Trimethylpentandiol, Trimethylolpropan, Pentaerythrit, 1,2-Propandiol, 1,3-Propandiol, 1,4-Cyclohexandimethanol, 2,4-Diethyl-1,5-pentandiol, 2-Butyl-2-ethyl-1,3-propandiol, 2-Ethyl-1,3-hexandiol, 1,4-Bis(2-hydroxyethoxy)benzol, Bis-hydroxymethyl-tricyclo[5.2.1.0^{2,6}]decan, Bis(2-hydroxyethoxy-methyl)-tricyclo[5.2.1.0^{2,6}]decan und Mischungen davon. Vorzugsweise werden 1,6-Hexandiol, 1,3-Propandiol oder 1,4-Butandiol verwendet.

Als gegebenenfalls vorhandene Komponente a6) können beispielsweise monofunktionelle Alkohole der aliphatischen und araliphatischen Reihe oder entsprechende Polyetheralkohole verwendet werden. Der Einsatz von aliphatischen Alkoholen ist bevorzugt, insbesondere C₁-C₁₀-Alkohole.

Beispielsweise einsetzbar sind: Methanol, Ethanol, Propanol, Butanol, Hexanol, 2-Ethylhexanol, 2-Methoxyethanol, Diethylenglykolmonomethylether und Benzylalkohol, Polyoxyethylen-monoalkylether, Polyoxypropylen-monoalkylether sowie Monoalkyl-terminierte Mischpolyether aus Ethylenoxid und Propylenoxid. Der Begriff "monoalkyl-" steht hierin vorzugsweise für C₁-bis C₄-Alkylreste wie Methyl, Ethyl, Propyl, Butyl. Besonders bevorzugt sind 2-Ethylhexanol sowie monofunktionelle Polyether auf Basis von Ethylenoxid und/oder Propylenoxid mit einem Molekulargewicht von max. 2500 g/mol.

In einer bevorzugten Ausführungsform wird das Molverhältnis der als Kettenabbrecher fungierenden Komponenten a6) so gewählt, dass sich die gewünschte NCO-Funktionalität des Polyurethan-Prepolymers einstellt. Insbesondere ist es vorteilhaft, die Komponenten a6) einzusetzen, wenn Komponenten mit einer Funktionalität größer als 2 als Bausteine zur Herstellung des Polyurethans eingesetzt werden.

Das Molverhältnis der Komponenten a1) bis a6), bezogen auf 1 000 g Prepolymer a) beträgt
0,1 bis 1,70, bevorzugt 0,5 bis 1,20 Mol-Äquivalente OH der Komponente a1),
0,1 bis 1,70, bevorzugt 0,5 bis 1,20 Mol-Äquivalente OH der Komponente a2),
0,1 bis 1,0, bevorzugt 0,2 bis 0,7 Mol-Äquivalente OH der Komponente a3),
1,0 bis 3,5, bevorzugt 0,7 bis 3,0 Mol-Äquivalente NCO der Komponente a4) und
0 bis 1,0, bevorzugt 0 bis 0,5 Mol-Äquivalente OH der Komponente a5)
0 bis 0,2, bevorzugt 0,001 bis 0,2 Mol-Äquivalente OH der Komponente a6),
wobei das Molverhältnis der Summe aller Mol-Äquivalente NCO aus der Komponente a4) und der Summe aller Mol-Äquivalente OH aus den Komponenten a1), a2), a3), a5) und a6) von 1,05 bis 2,5 : 1, bevorzugt 1,1 bis 1,7 : 1 beträgt, ganz besonders bevorzugt ist ein Verhältnis von 1,20 bis 1,60 : 1.

Ganz besonders bevorzugt sind erfindungsgemäße Polyurethane, bei denen das Verhältnis der Mol-Äquivalente OH aus Komponente a1) zu Komponente a2) 1:3 bis 4:1 beträgt und der Gehalt an ionischen Gruppen aus Komponente a3) von 50 bis 700 Milliäquivalenten an Carboxylat- bzw. Sulfonatgruppen, bevorzugt von 100 bis 300 Milliäquivalenten an Carboxylatgruppen, bezogen auf 1000 g Polyurethan beträgt.

Bevorzugt beträgt die molare Summe der Komponenten a6), bezogen auf 1 000 g Prepolymer a) 0 bis 0,2 mol, bevorzugt 0,001 bis 0,2 mol, besonders bevorzugt 0,01 bis 0,1 mol OH.

Geeignete Polysiloxankomponenten b) sind NCO-reaktive Polydimethyl-siloxane, die primäre Aminogruppen, sekundäre Aminogruppen oder Hydroxylgruppen oder Mischungen daraus aufweisen. Darüber hinaus können die Polysiloxankomponenten auch weitere funktionelle Gruppen enthalten, die nicht NCO-reaktiv sind, zum Beispiel Acylgruppen wie Formyloxy, Formamido, Acetoxy, Propionyloxy, Butanoyloxy oder tertiäre Aminogruppen, Sulfonatgruppen, Phosphonatgruppen oder Polyether-Einheiten, die sich von Ethylenoxid und / oder Propylenoxid-Einheiten ableiten.

Bevorzugt sind lineare Polysiloxane, die mindestens eine primäre Aminogruppe, sekundäre Aminogruppe oder Hydroxylgruppe aufweisen, wobei die Funktionen bevorzugt endständig und/oder seitenständig in der Polysiloxankette angeordnet sind und über einen organischen Rest als Brückenglied mit der Siloxankette verbunden sind. Geeignete Brückenglieder sind zweiwertige organische Reste wie Methylen, Ethylen, Propylenreste oder durch Sauerstoff oder tertäre Aminogruppen unterbrochene zweiwertige Kohlenwasserstoffreste wie der Ethylen-3-oxypropyl-, Propylen-3-oxypropyl-, Ethylen-3-(N-methyl)aminopropyl-Rest.

Besonders bevorzugt sind lineare endständig substituierte Polydimethylsiloxane, die als NCO-reaktive Gruppen Aminomethyl-, Aminopropyl-, Hydroxypropyl-, Hydroxymethyl-, Hydroxyethoxy(alkylenoxy)-propyl-Gruppen aufweisen. Weiterhin geeignet sind Polysiloxane, die durch Umsetzung von Polysiloxanen, enthaltend endständige Epoxygruppen, mit Aminen, Diaminen oder Hydroxyalkylaminen erhalten werden. Ebenso geeignet sind Polysiloxane, die durch Umsetzung von Aminopropyl- oder Aminoethylaminopropyl-terminierten Polysiloxanen mit Alkylenoxiden erhältlich sind. Besonders bevorzugt sind Polysiloxane, die eine mittlere Molmasse kleiner als 1500 g/mol, bevorzugt größer als 400 und kleiner als 1500 g/mol, aufweisen.

Ganz besonders bevorzugt sind endständig substituierte Polysiloxane mit sekundären und / oder primären Aminogruppen oder Hydroxylgruppen, insbesondere Aminogruppen, die einen Gehalt an nicht funktionalisierten Polysiloxanen, insbesondere permethylierten cyclischen Siloxanen von weniger als 5%, bevorzugt weniger als 1% , besonders bevorzugt einen Gehalt von D3 (Hexamethylcyclotrisiloxan), D4 (Octamethylcyclotetrasiloxan) und D5 (Dekamethylcyclopentasiloxan) von jeweils weniger als 0,1% aufweisen und eine mittlere Molmasse von 400 bis 1490 g/mol aufweisen.

Bevorzugt sind außerdem Polysiloxane, die eine Funktionalität an gegenüber Isocyanaten reaktiven Gruppen von 1 bis 3, besonders bevorzugt von 1,8 bis 2,2, ganz besonders bevorzugt von 1,95 bis 2,05 aufweisen.

Die Amine der Komponente c) dienen vorzugsweise zur Kettenverlängerung des NCO-Prepolymers gemäß den weiter unten erläuterten Herstellungsverfahren für die erfindungsgemäßen Polyurethane. Geeignete Verbindungen der Komponente c) sind beispielsweise Ethylendiamin, Diethylentriamin, Hexamethylendiamin, Isophorondiamin, Dicyclohexyhnethan-diamin, Ethanolamin, Propanolamin, N-Methylethanolamin, Diethanolamin, N,N,N'-tris-2-hydroxyethyl-ethylendiamin, 2-Aminoethyl-2-aminoethansulfonsäure-Natrium-Salz oder -Kalium-Salz, 2-Aminoethyl-2-aminoethancarbonsäure-Natrium-Salz oder -Kalium-Salz, das Addukt aus Isophorondiamin und Acrylsäure im Molverhältnis 1:1 (als Natrium- oder Kalium-Salz). Bevorzugt verwendet werden Ethylendiamin und Diethylentriamin.

Die Aufbaukomponente c) dient insbesondere dem weiteren Molmassenaufbau des Polyurethans. Dabei entstehen durch Reaktion mit den NCO-Gruppen NH₂-Gruppen, die mit weiteren NCO-Gruppen unter Molmassenaufbau durch Harnstoffverknüpfung abreagieren. Verbleiben nach der Reaktion des NCO-Prepolymers noch freie Isocyanatgruupen, so werden diese bei der Dispergierung in Wasser vollständig unter Kettenverlängerung zu Harnstoffgruppen umgesetzt.

Im Rahmen dieser Anmeldung werden unter Polyurethanen daher auch Polyurethanharnstoffe verstanden.

Ebenfalls bevorzugt ist es, die molare Absolutmenge an den Komponenten a) bis d) so einzustellen, dass das resultierende mittlere Zahlenmittel der Molmasse des erfindungsgemäßen Polyurethans 5 000 bis 50 000 g/mol, bevorzugt 7 000 bis 40 000 g/mol, insbesondere 8 000 bis 30 000 g/mol ist.

Es ist bevorzugt, die Absolutmenge an Polysiloxan-Komponente b) so einzustellen, dass ein aus der Polyurethandispersion auf eine Glasplatte gerakelter und getrockneter Film klar und durchsichtig ist. Bevorzugt sind Absoluteinsatzmengen der Polysiloxan-Komponente b) von 0,0001 bis 10 Gew.-%, bevorzugt 0,001 bis 2,5 Gew.-%, besonders bevorzugt 0,001 bis 1 Gew.-%, jeweils bezogen auf das erfindungsgemäße Polyurethan.

Bevorzugt sind erfindungsgemäße Polyurethane, bei denen das Molverhältnis der Polysiloxan-Komponente b) zu den NCO-Gruppen des Prepolymers a) 0,0001 bis 0,2, bevorzugt 0,01 bis 0,1, besonders bevorzugt 0,01 bis 0,05 beträgt.

Bevorzugt sind erfindungsgemäße Polyurethane, bei denen das Molverhältnis von Amin-Kettenverlängerer (Komponente c)), zu den NCO-Gruppen des Prepolymers a) 0,1 bis 0,98, bevorzugt 0,20 bis 0,95, besonders bevorzugt 0,25 bis 0,80 beträgt.

Ebenfalls bevorzugt ist es, wenn der Gehalt der ionischen Gruppen, insbesondere der Carboxylatgruppen, des Polyurethans 50 bis 2000, vorzugsweise 50 bis 1000, insbesondere 100 bis 500 Millival, bezogen auf 1000 g des Polyurethans, beträgt.

Bevorzugte Polyurethane sind aufgebaut aus:
0,2 - 0,6 Mol-Äquivalente OH, besonders bevorzugt 0,2 - 0,5 Mol-Äquivalente OH der Komponente a1),
0,5 - 1,2 Mol-Äquivalente OH, besonders bevorzugt 0,7 - 1,1 Mol-Äquivalente OH der Komponente a2),
0,1 - 0,7 Mol-Äquivalente OH, besonders bevorzugt 0,2 - 0,5 Mol-Äquivalente OH der Komponente a3),
1,0 - 3,0 Mol-Äquivalente NCO, besonders bevorzugt 1,5 - 2,5 Mol-Äquivalente NCO der Komponente a4),
0 - 0,5 Mol-Äquivalente OH, besonders bevorzugt 0 - 0,3 Mol-Äquivalente OH der Komponente a5),
0,001 - 0,20 Mol-Äquivalente OH, besonders bevorzugt 0,01 - 0,10 Mol-Äquivalente OH der Komponente a6),
0,001 - 0,1 Mol-Äquivalente NH, besonders bevorzugt 0,001 - 0,07 Mol-Äquivalente NH der Komponente b),
0,2 - 0,95 Mol-Äquivalente NH, besonders bevorzugt 0,25 - 0,8 Mol-Äquivalente NH der Komponente c) und
0,005 - 0,1 Mol-Äquivalente Wasser (Komponente d),
wobei das Verhältnis der Summe aller mol NCO aus der Komponente a4) zu der Summe aller Mol-Äquivalente OH aus den Komponenten a1), a2), a3), a5) und a6) 1,05 bis 2,5 : 1, bevorzugt 1,1 bis 1,7 : 1, besonders bevorzugt 1,20 bis 1,60 : 1 beträgt, und der Gehalt an ionischen Gruppen aus Komponente a3) 50 bis 700 Milliäquivalenten an Carboxylatgruppen, bezogen auf Polyurethan, bevorzugt von 100 bis 300 Milliäquivalenten an Carboxylatgruppen, bezogen auf Polyurethan beträgt, wobei zur Neutralisation der Carboxylgruppen ein tertiäres Amin oder Alkanolamin eingesetzt wird und der Neutralisationsgrad bei 50 bis 100 % liegt.

Ganz besonders bevorzugt sind erfindungsgemäße Polyurethane, die aufgebaut sind aus
0,2 - 0,6 Mol-Äquivalente OH, besonders bevorzugt 0,2 - 0,5 Mol-Äquivalente OH eines Polyestercarbonatdiols der Komponente a1), vorzugsweise eines Polyestercarbonatdiols mit einer Molmasse von 800 bis 4000 g/mol, das aus Hexandiol, Caprolacton und Dialkylcarbonaten / Diarylcarbonaten unter Polykondensation, insbesondere unter Schmelz-Polykondensation im Vakuum durch Entfernen des Alkohols aus dem Reaktionsgemisch, erhältlich ist,
0,5 - 1,2 Mol-Äquivalente OH, besonders bevorzugt 0,7 - 1,1 Mol-Äquivalente OH eines estergruppenfreien Polyetherdiols der Komponente a2), vorzugsweise ein Polytetrahydrofurandiol der Molmasse von 750 bis 4000 g/mol,
0,1 - 0,7 Mol-Äquivalente OH, besonders bevorzugt 0,2 - 0,5 Mol-Äquivalente OH der Dimethylolpropionsäure der Komponente a3),
1,0 - 3,0 Mol-Äquivalente NCO, besonders bevorzugt 1,5 - 2,5 Mol-Äquivalente NCO von Diisocyanaten der Komponente a4), vorzugsweise aus der Gruppe Hexamethylendiisocyanat, Isophorondiisocyanat und Dicyclohexylmethan-diisocyanat, besonders bevorzugt Hexamethylendiisocyanat im Gemisch mit Isophorondiisocyanat und/oder Dicyclohexyhnethandiisocyanat, insbesondere im Verhältnis Hexamethylendiisocyanat : Isophorondiisocyanat : Dicyclohexylmethandiisocyanat im Molverhältnis 3:1:0,1 bis 1:3:3,
0 - 0,5 Mol-Äquivalente OH, besonders bevorzugt 0 - 0,3 Mol-Äquivalente OH eines Diols der Komponente a5), vorzugsweise aus der Gruppe Propandiol, Butandiol oder Hexandiol,
0,001 - 0,20 Mol-Äquivalente OH, besonders bevorzugt 0,01 - 0,10 Mol-Äquivalente OH eines Monoalkohols der Komponente a6), vorzugsweise Ethylhexanol,
0,001 - 0,1 Mol-Äquivalente NH, besonders bevorzugt 0,001 - 0,07 Mol-Äquivalente NH eines α,ω-Bis(3-aminopropyl)-polydimethylsiloxans der Komponente b) mit einer Molmasse 700 - 1000 g/mol und einer Amin- Funktionalität von 1,95- 2,05,
0,2 - 0,95 Mol-Äquivalente NH, besonders bevorzugt 0,25 - 0,8 Mol-Äquivalente NH einer Komponente c) aus der Gruppe Ethylendiamin, Isophorondiamin, Diethylentriamin, Hexamethylendiamin, insbesondere einer Mischung aus Ethylendiamin und Diethylentriamin im NH-Molverhältnis von 0,1 : 1 bis 1: 0,1 und
0,005 - 0,1 Mol-Äquivalente Wasser der Komponente d),
wobei das Verhältnis der Summe aller Mol-Äquivalente NCO aus der Komponente a4) zu der Summe aller Mol-Äquivalente OH aus den Komponenten a1), a2), a3), a5) und a6) 1,05 bis 2,5 : 1, bevorzugt 1,1 bis 1,7 : 1, besonders bevorzugt 1,20 bis 1,60 : 1 beträgt, und der Gehalt an ionischen Gruppen aus Komponente a3) von 50 bis 700, bevorzugt von 100 bis 300 Milliäquivalenten an Carboxylatgruppen bezogen auf Polyurethan, wobei die Carboxylgruppen vorzugsweise mit einem tertiären Amin oder Alkanolamin von 50 bis 100 % neutralisiert sind.

Die erfindungsgemäßen Polyurethandispersionen enthalten vorzugsweise weniger als 1 Gew.-%, vorzugsweise weniger als 0,1 Gew.% eines organischen Lösungsmittels.

In einer besonderen Ausführungsform beträgt
die mittlere Teilchengröße des Polyurethans weniger als 200 nm, vorzugsweise 20 bis 150, insbesondere 40 bis 100 nm.

Die Teilchengröße wird vorzugsweise mittels Laserkorrelationsspektroskopie, Sedimentation in der Ultrazentrifuge oder durch Elektronenmikroskopie bestimmt.

Die Erfindung betrifft weiterhin ein Verfahren zur Herstellung der erfindungsgemäßen Polyurethane, das dadurch gekennzeichnet ist, dass man die Komponenten a1) bis a4) und gegebenenfalls a5) und/oder a6) zu einem NCO-Prepolymer umsetzt, und dieses mit den Komponenten b) und c) und Wasser zu einem Polyurethan umsetzt. Die Polysiloxan-Komponente b) wird dabei vorzugsweise vollständig eingebaut.

Bevorzugt beträgt die molare Summe aller Komponenten b), bezogen auf 1 000 g Prepolymer wenigstens 0,0001 mol, bevorzugt 0,001 bis 0,6 mol, besonders bevorzugt 0,002 bis 0,5 mol.

In einer bevorzugten Ausführungsform ist das Verfahren dadurch gekennzeichnet, dass man entweder aus den Komponenten a1) bis a4) und gegebenenfalls a5) und/oder a6) ein NCO-Prepolymer aufbaut und anschließend das NCO-Prepolymer mit der Komponente b) umsetzt und dann die gegebenenfalls vorhandenen potentiellen ionischen Gruppen, insbesondere Carbonsäuregruppen mit einer gegenüber NCO-Gruppen nicht reaktiven Base neutralisiert und das neutralisierte Prepolymer mit Wasser und der Komponente c) umsetzt, oder durch Umsetzung eines Gemisches enthaltend die Komponenten a1) bis a4) und gegebenenfalls a5) und/oder a6) ein NCO-Prepolymer herstellt, dann die gegebenenfalls vorhandenen potentiell ionischen Gruppen, insbesondere Carbonsäuregruppen durch Zusatz einer gegenüber NCO-Gruppen nicht reaktiven Base neutralisiert und mit der Komponente b) umsetzt, in Wasser dispergiert und das neutralisierte Prepolymer mit der Komponente c) umsetzt.

Das erfmdungsgemäße Verfahren wird bevorzugt nach der Schmelz-Dispergier-Methode durchgeführt. Die Schmelz-Dispergier-Methode ist dadurch gekennzeichnet, dass man ein NCO-Prepolymer - entweder als Schmelze oder als Lösung in einem nicht NCO-reaktivem, wassermischbarem Lösemittel - enthaltend eine zur Bildung einer stabilen Dispersion ausreichenden Menge an eingebauten ionischen Gruppen - oder durch vorherige Neutralisation in ionische Gruppen überführte potentiell ionische Gruppen entweder in Wasser einrührt oder Wasser in das Prepolymer einrührt. Zur Erleichterung der Dispergierung ist es auch möglich, wasserdispergierbare Polyisocyanate oder klassische externe Emulgatoren zuzusetzen. Besonders bevorzugt sind nichtionische und anionische Emulgatoren. Besonders bevorzugt ist es, keine weiteren Emulgatoren zu zugeben.

Hierbei bildet sich im Allgemeinen eine stabile Dispersion des Prepolymers. Die NCO-Gruppen können dann entweder durch Reaktion mit Wasser abreagieren; es ist aber auch möglich, sie mit vorzugsweise wassermischbaren Aminen umzusetzen.

Vorzugsweise werden bei der Prepolymerherstellung im erfindungsgemäßen Verfahren organische Lösungsmittel eingesetzt, die nicht NCO-reaktiv und mit Wasser mischbar sind.

Als geeignete Lösungsmittel zur Herstellung der Prepolymeren a) können beispielsweise genannt werden:
Ketone, wie Aceton und Butanon; Ether, wie Tetrahydrofuran, Dioxan und Dimethoxyethan, Etherester wie Methoxypropylacetat, (cyclische) Amide und Harnstoffe wie Dimethylformamid, Dimethylacetamid, N,N'-Dimethyl-2,5-Diazapentanon und N-Methylpyrrolidon. Besonders bevorzugt ist Aceton.

Diese Lösemittel können in jeder Stufe der Prepolymerherstellung zugesetzt werden.

Besonders günstig ist allerdings eine Fahrweise, in der das Lösungsmittel erst im Verlauf der Reaktion zugesetzt wird. In der Anfangsphase der Prepolymerherstellung ist es vorteilhaft, die Reaktion ohne Zusatz von Lösemittel durchzuführen.

Die Prepolymerherstellung erfolgt vorzugsweise bei Temperaturen von 40 bis 120°C, besonders bevorzugt 50 bis 110°C.

Die Polysiloxan-Komponente b) wird vorzugsweise mit dem NCO-Prepolymer umgesetzt, bevor das NCO-Prepolymer in Wasser dispergiert wird. Im Falle aminofunktioneller Polysiloxane ist eine Reaktionszeit von 5 Minuten bis zu 2 Stunden bei 20°C bis 70°C bevorzugt. Die Reaktion erfolgt bevorzugt vor der Neutralisation mit der Base in der organischen Lösung des Prepolymers.

Im Falle der Hydroxylgruppen aufweisenden Polysiloxane b) ist eine frühere Zugabe zum Prepolymer a) bevorzugt, um eine möglichst quantitative Umsetzung der Polysiloxane zu gewährleisten.

Einen Sonderfall stellen Polysiloxane dar, die mehr als zwei Hydroxylgruppen und/oder Aminogruppen aufweisen. Solche polyfunktionellen Verbindungen werden bevorzugt in Aceton gelöst oder zu der fertigen Dispersion des Prepolymers in Wasser gegeben, um eine vorzeitige Vernetzung zu vermeiden.

Auch gegebenenfalls vorhandene potentielle ionische Gruppen, insbesondere die Carbonsäuregruppen des NCO-Prepolymeren werden vorzugsweise zumindest teilweise neutralisiert, bevor das NCO-Prepolymer in Wasser dispergiert wird. Der Neutralisationsgrad kann zwischen 20 % und 100 % bezogen auf Carboxylgruppen betragen. Besonders bevorzugt ist ein Neutralisationsgrad von 50 bis 98 %. Die Neutralisation wird bei 50 bis 90°C durchgeführt.

Als Basen zur Neutralisation der Carboxylgruppen / Sulfonatgruppen kommen vorzugsweise Ammoniak oder Amine in Frage, insbesondere tertiäre Amine wie Trimethylamin, Triethylamin, Morpholin, N-Methylmorpholin, N-Methylpiperidin, Dimethylethanolamin, Methyldiethanolamin oder N,N-Dimethyl-N-[2-ethoxy]-ethylamin, Tri-n-propylamin, Dimethyl-2-propanolamin, Triisopropylamin, Diethylpropylamin, Diethyl-2-hydroxypropylamin, 2-Amino-2-methyl-1-propanol, Diethyl-2-propanolamin, Diethylaminopropylamin, Triisopropanolamin beziehungsweise Gemische dieser und anderer Neutralisationsmittel usw. Ebenfalls geeignet, aber nicht bevorzugt, sind Basen wie Natriumhydroxid, Kaliumhydroxid, Natriumcarbonat, Kaliumcarbonat und Lithiumhydroxid, insbesondere zur Neutralisation von Sulfonatgruppen.

Die Komponente c) wird vorzugsweise in Gegenwart eines 10- bis 60-fachen Gewichtsüberschusses an Wasser eingesetzt. Dies wird vorzugsweise sichergestellt dadurch, dass man die Komponente c) zusammen mit dem Überschuss an Wasser in das NCO-Prepolymer einrührt oder dadurch, dass man das NCO-Prepolymer zunächst in Wasser dispergiert, vorzugsweise bei einer Temperatur von 30 bis 60°C, und nach der Dispergierung sofort die Komponente c), gegebenenfalls als wässrige Lösung zugibt.

Diese Verfahrensvariante wird vorzugsweise so durchgeführt, dass man zunächst Wasser vorlegt und das Reaktionsprodukt aus Prepolymer a) und Komponente b) mit einer Base neutralisiert und dann zur wässrigen Phase zusetzt. Weiterhin bevorzugt ist eine Verfahrensvariante, bei der die Prepolymerlösung vorgelegt wird und das Wasser zu dieser Lösung dosiert wird. Bei der Dispergierung reagiert ein geringer Teil der NCO-Gruppen bereits ab (Kompoennte d). Daher wird sofort nach der Dispergierung die Komponente c) zugesetzt. Nach der Zugabe der Komponente c) wird vorzugsweise so lange weiter gerührt, bis das Reaktionsprodukt mit der stöchiometrischen Menge Wasser (Komponente d) reagiert hat und NCO-frei ist.

Es ist auch möglich, das Pepolymer a) in Lösung mit Komponente b) und - gegebenenfalls einem Teil - der Komponente c) umzusetzen, anschließend mit der Base zu neutralisieren, in Wasser zu dispergieren, und dann den Rest der Komponente c) zuzusetzen. Dann wird weiter gerührt, bis das Produkt NCO-frei ist.

Am Ende der Reaktion wird bei allen Verfahrensvarianten vorzugsweise das Lösemittel destillativ entfernt. Man erhält dann wässrige Dispersionen, die einen Festgehalt von 20 bis 60 Gew.-% aufweisen, und einen Gehalt an organischen Lösungsmitteln von ≦ 0,1 Gew.-%.

Bevorzugt ist es, dass die erfindungsgemäßen Polyurethane bzw. ihre wässrigen Dispersionen bei ihrem Einsatz zur Beschichtung weitere Zusätze erhalten. Beispielsweise kommen als weitere Bindemittel Latices auf Polyurethanbasis oder Acrylatbasis in Frage.

Andere weitere Zusätze können Viskositätsregler, organische Basen zur pH-Einstellung, Entschäumer, Verlaufshilfsmittel, Antioxidantien, UV-Absorber / Lichtschutzmittel und Mikrobizide zur Stabilisierung sein. Derartige Zusätze werden im Allgemeinen in untergeordneter Menge eingesetzt; die Mengen betragen vorzugsweise 100 ppm bis 5 %, bezogen auf die Dispersion. Weiterhin können die Mischungen Mattiermittel und weitere Hilfsmittel, die zur Einstellung bestimmter Griffeigenschaften erforderlich sind, enthalten.

Die Erfindung betrifft weiterhin ein vorzugsweise wässriges Polyurethansystem enthaltend die Komponente A) und wenigstens eine der Komponenten A1) und B):
A) wenigstens ein erfindungsgemäßes Polyurethan, vorzugsweise als wässrige Polyurethandispersion,
A1) gegebenenfalls eine oder mehrere weitere Polymerdispersionen wie Polyacrylatdispersionen oder Polyurethandispersionen und
B) gegebenenfalls ein wasserdispergierbares, aliphatisches oder cycloaliphatisches Polyisocyanat mit einer NCO-Funktionalität von wenigstens 2, vorzugsweise 2 bis 6, insbesondere 2,3 bis 4.

Wenn Komponente B) eingesetzt wird, wird das Verhältnis der Komponente A) und A1) zu der Komponente B) bevorzugt auf 100 :1 bis 100 : 6, vorzugsweise 100 : 1 bis 100 : 4 eingestellt, jeweils bezogen auf Festkörpergehalt.

Bevorzugte Polyisocyanate der Komponente B) sind polyether- oder ionisch modifizierte Biurete, Allophanate, Trimerisate des Hexamethylendiisocyanats (HDI) oder des Isophorondiisocyanats (IPDI). Besonders bevorzugt sind nichtionische Polyisocyanate, die mit Hilfe von Polyethern modifiziert sind. Als solche sind beispielsweise Polyisocyanatgemische geeignet, die durch Reaktion von aliphatischen oder cycloaliphatische Polyisocyanaten mit im statistischen Mittel weniger als 10 Ethylenoxideinheiten aufweisenden Polyethylenoxidpolyetheralkoholen erhältlich sind. Solche sind beispielsweise aus EP-A 540 985 bekannt.

Neben diesen rein nichtionisch hydrophilierten, Polyetherurethane enthaltenden Polyisocyanaten sind auch Polyether-modifizierte wasserdispergierbare Polyisocyanate bekannt, die zur Verbesserung der Emulgierbarkeit oder zur Erzielung spezieller Effekte zusätzlich noch ionische Gruppen, beispielsweise Sulfonatgruppen (vgl. z.B. EP-A 703 255) oder Amino- bzw. Ammoniumgruppen (vgl. z.B. EP-A 582 166) aufweisen.

Neben den bereits erwähnten Polyisocyanaten sind als Komponent B) auch Carbodiimidgruppen enthaltende Polyisocyanate geeignet, wie beispielsweise BAYDERM® Fix CI (Bayer Chemicals AG).

Als geeignete Polyisocyanate der Komponente B) seien beispielsweise folgende genannt:
- Umsetzungsprodukt aus 80 Teilen Isocyanuratgruppen enthaltendem HDI-Trimerisat und 20 Teilen eines Ethanol-gestarteten EO-Polyethers mit einem mittleren Molekulargewicht von 350 g/mol;
- Umsetzungsprodukt aus 90 Teilen Isocyanuratgruppen enthaltendem HDI-Trimerisat mit 10 Teilen eines Methanol-gestarteten EO-Polyethers eines mittleren Molekulargewichts von 750 g/mol;
- Umsetzungsprodukt aus 85 Teilen Isocyanuratgruppen enthaltendem HDI-Trimerisat mit 15 Teilen eines Butanol-gestarteten EO/PO-Blockcopolyethers mit EO/PO-Verhältnis 7:3 und einer mittleren Molmasse von 2250 g/mol;
- Umsetzungsprodukt aus 83 Teilen HDI-Biuret und 17 Teilen eines Methanol-gestarteten EO-Polyethers der mittleren Molmasse 650 g/mol;
- Umsetzungsprodukt von 87 Teilen IPDI-Trimerisat mit 13 Teilen einer 2:1-Mischung von Methanol-gestarteten EO-Polyethern der mittleren Molmasse von 350 und 750 g/mol;
- Umsetzungsprodukt von 80 Teilen Isocyanuratgruppen enthaltendem HDI-Trimerisat mit 3 Teilen Triethylenglykol und 17 Teilen eines Ethanol-gestarteten EO-Polyethers der mittleren Molmasse 550 g/mol;
- Umsetzungsprodukt von 87 Teilen Isocyanuratgruppen enthaltendem HDI-Trimerisat mit 0,2 Teilen N,N-Dimethylethanolamin und 16,9 Teilen eines Methanol-gestarteten EO-Polyethers der mittleren Molmasse 350 g/mol, wobei nach der Umsetzung die tertiäre Aminogruppe mit Dibutylphosphorsäure protoniert wird;
- Umsetzungsprodukt von 85 Teilen Isocyanuratgruppen enthaltendem HDI-Trimerisat mit 5 Teilen des ethoxilierten Natriumsalzes der 1,4-Butandiol-2-sulfonsäure [mittlere Molmasse 368 g/mol] und 10 Teilen eines Ethanol-gestarteten EO-Polyethers der mittleren Molmasse 370 g/mol.

Die erfindungsgemäßen Polyurethansysteme können weitere Hilfs- und Zusatzstoffe wie beispielsweise Vernetzer mit Carbodiimid-Gruppen, beispielsweise BAYDERM® Fix CI, anorganische und organische Pigmente, Farbstoffe, Verlaufsmittel, Viskositätsregler ionischer sowie nicht-ionischer Natur, natürliche und synthetische Wachse, Entschäumer sowie Griffmittel enthalten.

Die erfindungsgemäßen Polyurethane bzw. ihre wässrigen Polyurethandispersionen liefern, vorzugsweise in dem erfindungsgemäßen wässrigen Polyurethansystem eingesetzt, insbesondere auf Leder Beschichtungen, die unter den üblichen technischen Bedingungen der Lederherstellung schnell trocknen. Diese Beschichtungen dienen vorteilhaft als Haftgrund für weitere Beschichtungen (Topcoats) auf Basis von Polymerdispersionen, bevorzugt Polyurethan-Dispersionen, um dem beschichteten Substrat besonders hohe Nassreibechtheiten sowie hohe Nass-, Trocken- und Kälteknickfestigkeiten zu verleihen.

Die mit der erfindungsgemäßen Polyurethane bzw. Polyurethan-Dispersion beschichteten Leder verhalten sich insbesondere beim Bügeln, Prägen oder Stapeln problemlos.

Die Verwendung der erfindungsgemäßen Polyurethan-Dispersion erfolgt vorteilhaft in der Weise, dass man zunächst eine entsprechende anwendungsfertige Zurichtflotte herstellt, mit der das Ledersubstrat beschichtet wird. Nach der Trocknung der Beschichtung werden die Leder mittels einer Prägeplatte, die das Negativbild des gewünschten Narbenmusters wiedergibt, bei 80 bis 120°C, 20 bis 200 bar und 1 bis 10 Sekunden geprägt. Insbesondere sind Durchlaufprägemaschinen, die einen Anpressdruck von 100 bis 200 bar bei einer Temperatur von 90 bis 120°C und einer Prägedauer von 1 bis 3 Sekunden erzeugen, bevorzugt.

Dabei ist trotz der geringen Härte der Grundierschicht, die durch den Einsatz der erfindungsgemäßen Dispersion bedingt ist, kein Kleben an der Platte beobachtet. Das Prägebild ist sehr sauber und gibt die feine Reliefstruktur der Prägeplatte sehr genau wieder.

Bekanntlich wird die Haftung einer Beschichtung auf einem beliebigen Substrat durch Zusatz von Siliconen generell verschlechtert. Völlig überraschend werden durch Einsatz der erfindungsgemäßen Polyurethan-Dispersionen, obwohl sie Silicone enthalten, Nass- und Trockenhaftung der Grundierungsbeschichtung erheblich verbessert.

Auf das mit der erfindungsgemäßen Polyurethandispersion behandelte und grundierte Leder wird nun eine weitere Schicht (Topcoat) aufgetragen, die die endgültige Oberfläche ergibt. Nach der Trocknung der Schicht wird das Leder gegebenenfalls gebügelt und gemillt, um dem Leder ein natürliches Aussehen zu verleihen.

Das Bügeln erfolgt in der Regel mit Hilfe einer Bügelpresse. Die Walzentemperatur liegt bei ca. 80 bis 120°C, der Walzenandruck bei 10 bis 80 bar. Die Behandlung dauert 1 bis 10 Sekunden. Unter dieser thermischen Druckbelastung sollte das Narbenbild keinen Schaden nehmen. Das heißt, die Ränder der aufgeprägten Reliefstruktur sollte nicht unscharf werden, das Narbenbild soll möglichst vollkommen erhalten bleiben. Völlig überraschend wird festgestellt, dass die mit dem erfindungsgemäßen Polyurethan hergestellten Leder einen deutlich besseren Prägestand haben als andere Polyurethan-Dispersionen, die eine ähnliche Shore A-Härte aufweisen. Die Knickechtheiten der erhaltenen Leder: Trockenknickbeständigkeit, Nassknickbeständigkeit und Kälteknickbeständigkeit sowie die Nassreibechtheit der Leder erfüllen alle Anforderungen oder übertreffen die Anforderungen sogar.

Die Trocken- und Nasshaftung der fertigen Leder mit Topcoat-Beschichtung ist wiederum überraschenderweise gegenüber denen, die mittels einer siliconfreien Polyurethandispersion als Grundierung hergestellt wurden, deutlich verbessert.

Die wässrigen Polyurethansysteme liefern nach dem Auftragen auf Substrate wie beispielsweise Metall, Holz, Papier, Textil, Kunststoff und insbesondere Leder und dem Trocknen einen geschlossenen Film bzw. homogene, fehlerfreie Beschichtungen, die entsprechend hohe Nassreibechtheiten besitzt.

Das erfmdungsgemäße Polyurethansystem besitzt überraschenderweise trotz seines eingebauten Silicon-Baustein extrem gute Verlaufseigenschaften, was wiederum zu sehr klaren, nicht narbenbelastenden Zurichtungen führt. Dadurch werden sehr elegante natürlich erscheinende Zurichtungen ermöglicht. Die optische Transparenz der Beschichtungen wird durch die eingebaute Siliconkomponente nicht beeinträchtigt. Überraschend sind daher auch im Gegensatz zu herkömmlichen Polyurethandispersionen, die Silicone nur als Additive enthalten, wobei die Silicone nicht in das Polyurethan eingebaut werden, trotz der geringen Verträglichkeit der SiliconKomponente mit den anderen Polyurethan-Synthesebausteinen hochglänzende Beschichtungen möglich.

Das erfindungsgemäße Polyurethansystem ist ebenfalls vorteilhaft, wenn es zusätzlich konventionelle hochmolekulare Latices enthält.

Das erfindungsgemäße Polyurethansystem als Grundierung liefert in vernetzter Form in Kombination mit einer Polyurethan-Topcoat Zurichtung mit klarer Oberfläche. Mode bedingt können jedoch auch Substrate, insbesondere Leder mit matter Oberfläche gefragt sein. Um diese Anforderungen zu erfüllen, ist es vorteilhaft, bereits in der Grundier-Zubereitung, die den Binder der Komponente A) enthält, gegebenenfalls organisch belegte Kieselsäuren einzusetzen. Die Kieselsäuren erzeugen eine matte Oberfläche der Zurichtung, sie wirken als Mattierungsmittel. Diese Kieselsäuren können besonders vorteilhaft in der Topcoat-Beschichtung eingesetzt werden. Jedoch ist auch ein anteiliger Zusatz zur Grundierung möglich. Auch bei matten Beschichtungen tritt bei den erfindungsgemäßen Polyurethandispersionen kein Grauaufbruch bei der mechanischen Knickbelastung des beschichteten Substrats auf. Es ist auch möglich, organische Mattierungen einzusetzen, beispielsweise gegebenenfalls vernetzte Polyurethan-Partikel mit einer mittleren Teilchengröße von 1 bis 15 µm, die gemäß DE-A-4016713 erhältlich sind, oder Polyacrylatpartikel mit einer mittleren Teilchengröße von 1 bis 15 µm, die beispielsweise gemäß DE-A-19911061 erhältlich sind.

Die Erfindung betrifft daher weiterhin die Verwendung des erfindungsgemäßen Polyurethans, vorzugsweise in Form seiner wässrigen Polyurethandispersion oder des erfindungsgemäßen wässrigen Polyurethansystems zur Beschichtung von verschiedensten Substraten, vorzugsweise Holz, Papier, Textil, Kunststoff, Metall, insbesondere von Leder.

Ebenfalls Gegenstand der vorliegenden Erfindung sind die mit dem erfindungsgemäßen Polyurethan, vorzugsweise in Form seiner wässrigen Polyurethandispersion oder mit dem erfmdungsgemäßen wässrigen Polyurethansystem beschichteten Substrate.

Die Erfindung betrifft weiterhin ein Verfahren zum Beschichten von Substraten, insbesondere von Leder, das dadurch gekennzeichnet ist, dass man das erfindungsgemäße Polyurethan, vorzugsweise in Form seiner wässrigen Polyurethandispersion oder das erfindungsgemäße wässrige Polyurethansystem auf Substrate aufträgt.

Geeignete Auftragstechniken sind bekannte Methoden wie Rakeln, Spritzen, Gießen oder die Beschichtung mit einem Reverse-Rollcoater. Die Spritzzurichtung ist bevorzugt.

Im Rahmen der Erfindung gelten auch alle anderen Kombinationen der oben offenbarten allgemeinen Ausführungsformen und Vorzugsbereiche sowie die Kombination der Vorzugsbereiche untereinander als offenbarte Vorzugsbereiche.

### Beispiele

### Beispiel 1

In einem 11-Reaktor mit Rührer und N₂-Überleitung werden 140,0 g eines linearen Hexandiolcaprolactoncarbonatdiols der mittleren Molmasse 2 000 g/mol, 209,5 g eines Polytetrahydrofurandiols der Molmasse 1 000, sowie 11,1 g Dimethylolpropionsäure vorgelegt und 30 min bei 120°C entwässert. Dann wird auf 80°C abgekühlt. Es werden 2,5 g 2-Ethylhexanol zugesetzt.

Danach werden bei 80°C unter Rühren 51,6 g Isophorondiisocyanat und 39,1 g Hexamethylendiisocyanat zugesetzt. Nach Abklingen der exothermen Reaktion wird bei 80°C gerührt, bis der NCO-Gehalt auf 1,74 % gefallen ist. Dann werden beginnend bei 80°C und unter gleichzeitiger Kühlung 300 g Aceton zugesetzt und bei 60°C verrührt, bis der NCO-Wert 1,04 % beträgt.

Das Prepolymer wird dann in einen 2 1-Reaktor mit Rührer und N₂-Überleitung überführt, der Prepolymerreaktor mit 164,4 g Aceton nachgespült und diese Spülflüssigkeit ebenfalls in den 2 1-Reaktor überführt. Bei 50-60°C werden unter schnellem Rühren 3,1 g α,ω-Bis(3-aminopropyl)-polydimethylsiloxan mit einer mittleren Molmasse von 886 g/mol, einem Basen-N-Gehalt von 3,16 % und einer Amin-Funktionalität von 2,0 (Gehalt an permethylierten Cyclosiloxanen < 0,5%) zugegeben und 60 Minuten bei 50°C verrührt. Dann werden 7,5 g Triethylamin zugegeben. Nach 15 min Nachrühren werden unter starkem Rühren 800 g Wasser eingetragen. Es bildet sich eine Dispersion des Prepolymers.

Sofort danach werden 2,5 g Ethylendiamin und 2,9 g Diethylentriamin, gelöst in 24,6 g Wasser, unter starkem Rühren eingetragen. Es wird 20 min stark nachgerührt, danach wird die Dispersion noch 1 Stunde bei mäßiger Rührleistung und 50°C ausgerührt.

Der Ansatz wird dann bei mäßiger Rührleistung bei vermindertem Druck (ca. 100- 250 mbar) und bei einer Temperatur von 40-60°C destilliert. Die Rohdispersion wird auf Raumtemperatur abgekühlt und durch Zugabe von Wasser auf den gewünschten Feststoffgehalt eingestellt.

Es resultiert eine feinteilige Dispersion mit folgenden Kenndaten:

| | |
|---|---|
| Feststoffgehalt (FK) | 35,2 % |
| Mittlere Teilchengröße (LKS) | 85 nm |
| Auslaufzeit (Fordbecher / Düse 4 mm) | 29 Sekunden |
| Viskosität (20°C, 100 s⁻¹) | 27 mPas |

### Beispiel 2

Beispiel 1 wird wiederholt, mit dem Unterschied, dass 6,3 g α,ω-Bis(3-aminopropyl)-polydimethylsiloxan (DMS-A11, ABCR; Gelest Inc.) mit einer mittleren Molmasse von 864 g/mol (N-Gehalt: 3,24 %, Viskosität: 12 mPas) eingesetzt werden.

Es resultiert eine feinteilige Dispersion mit folgenden Kenndaten:

| | |
|---|---|
| Feststoffgehalt (FK) | 35,0 % |
| Mittlere Teilchengröße (LKS) | 150 nm |
| Auslaufzeit (Fordbecher / 4mm Düse) | 10 sec |

### Beispiel 3

In einem 2 1-Reaktor mit Rührer und N₂-Überleitung werden 140,0 g eines linearen Hexandiolcaprolactoncarbonatdiols der mittleren Molmasse 2 000 g/mol, 209,5 g eines Polytetrahydrofurandiols der Molmasse 1 000, sowie 11,1 g Dimethylolpropionsäure und 2,5 g (0,012 mol OH) eines Anlagerungsproduktes von Natriumbisulfit an propoxyliertes Buten-2-diol-1,4 vorgelegt und 30 min bei 120°C entwässert. Die Mischung wird dann auf 80°C abgekühlt.

Danach werden bei 80°C unter Rühren 58,3 g Isophorondiisocyanat und 44,1 g Hexamethylendiisocyanat zugesetzt. Nach Abklingen der exothermen Reaktion wird 2 Stunden bei 80°C gerührt. Dann werden beginnend bei 80°C und unter gleichzeitiger Kühlung 300 g Aceton innerhalb von 45 Minuten zugetropft und weitere 2 Stunden bei 60°C verrührt, bis der NCO-Wert 1,57 % beträgt. Dann werden 150 g Aceton und 3,2 g α,ω-Bis(3-aminopropyl)-polydimethylsiloxan mit einer mittleren Molmasse von 864 g/mol, einem Amingehalt von 3,24 % und einer Viskosität (20°C) von 12 mPas (DMS-A11; ABCR, Gelest Inc.) zugesetzt und 45 Minuten bei 50°C verrührt. Dann werden 7,5 g Triethylamin zugegeben und 15 Minuten verrührt. Unter starkem Rühren werden 880 g Wasser schnell zudosiert. Es bildet sich sofort eine homogene Dispersion des Prepolymers.

Sofort danach werden 4,1 g Ethylendiamin und 4,6 g Diethylentriamin, gelöst in 21,3 g Wasser, unter starkem Rühren eingetragen. Es wird 20 min stark nachgerührt, danach wird die Dispersion noch 2 Stunden bei mäßiger Rührleistung und 50°C ausgerührt.

Der Ansatz wird dann bei mäßiger Rührleistung bei vermindertem Druck (ca. 100- 250 mbar) und bei einer Temperatur von 40-60°C destilliert. Die Rohdispersion wird auf Raumtemperatur abgekühlt und durch Zugabe von Wasser auf den gewünschten Feststoffgehalt eingestellt.

Es resultiert eine feinteilige Dispersion mit folgenden Kenndaten:

| | |
|---|---|
| Feststoffgehalt (FK) | 34,7% |
| Mittlere Teilchengröße (LKS) | 66 nm |
| Auslaufzeit (Fordbecher / 4 mm Düse) | 34,3 sec |

### Beispiel 4

In einem 11-Reaktor mit Rührer und N₂-Überleitung werden 140,0 g eines linearen Hexandiolcaprolactoncarbonatdiols der mittleren Molmasse 2 000 g/mol, 209,5 g eines Polytetrahydrofurandiols der Molmasse 1 000, sowie 11,1 g Dimethylolpropionsäure vorgelegt und 30 min bei 120°C entwässert. Dann wird auf 80°C abgekühlt. Es werden 2,5 g 2-Ethylhexanol zugesetzt.

Danach werden bei 80°C unter Rühren 51,6 g Isophorondiisocyanat und 39,1 g Hexamethylendiisocyanat zugesetzt. Nach Abklingen der exothermen Reaktion wird bei 80°C gerührt, bis der NCO-Wert auf 1,74% gefallen ist. Dann werden beginnend bei 80°C und unter gleichzeitiger Kühlung 750 g Aceton zugesetzt und bei 60°C verrührt, bis der NCO-Wert 0,65 % beträgt.

Bei 50°C werden unter schnellem Rühren 3,1 g α,ω-Bis(3-aminopropyl)-polydimethylsiloxan mit einer mittleren Molmasse von 886 g/mol, einem Basen-N-Gehalt von 3,16 % und einer Amin-Funktionalität von 2,0 zugegeben und 45 Minuten bei 50°C verrührt. Dann werden 7,5 g Triethylamin zugegeben.

Nach 15 min Nachrühren wird die acetonische Prepolymerlösung unter starkem Rühren in 810 g Wasser von 40°C eingetragen. Es bildet sich bei einer Mischtemperatur von 46,7°C eine Dispersion des Prepolymers.

Sofort danach werden 2,5 g Ethylendiamin und 2,9 g Diethylentriamin, gelöst in 24,6 g Wasser, unter starkem Rühren eingetragen und 15 Minuten stark nachgerührt. Danach wird die Dispersion noch 1 Stunde bei mäßiger Rührleistung und 50°C nachgerührt.

Der Ansatz wird dann bei mäßiger Rührleistung bei vermindertem Druck (ca. 100- 500 mbar) und bei einer Temperatur von 40-60°C destilliert. Die Rohdispersion wird auf Raumtemperatur abgekühlt und durch Zugabe von Wasser auf den gewünschten Feststoffgehalt eingestellt.

Es resultiert eine feinteilige Dispersion mit folgenden Kenndaten:

| | |
|---|---|
| Feststoffgehalt (FK) | 35,4 % |
| Mittlere Teilchengröße (LKS) | 135 nm |
| Auslaufzeit (Fordbecher / Düse 4 mm) | 17 Sekunden |
| Viskosität (20°C, 100 s⁻¹) | 12 mPas |

### Beispiel 5

In einem 11-Reaktor mit Rührer und N₂-Überleitung werden 158,0 g eines linearen Hexandiolcaprolactoncarbonatdiols der mittleren Molmasse 2 000 g/mol, 200,5 g eines Polytetrahydrofurandiols der Molmasse 1 000, sowie 11,1 g Dimethylolpropionsäure vorgelegt und 30 min bei 120°C entwässert. Dann wird auf 80°C abgekühlt. Es werden 2,7 g 2-Ethylhexanol zugesetzt.

Danach werden bei 80°C unter Rühren 51,6 g Isophorondiisocyanat und 39,1 g Hexamethylendiisocyanat zugesetzt. Nach Abklingen der exothermen Reaktion wird 70 Minuten bei 80°C gerührt. Dann werden beginnend bei 80°C und unter gleichzeitiger Kühlung 750 g Aceton zugesetzt und bei 57-60°C verrührt, bis der NCO-Wert 0,64 % beträgt.

Bei 50°C werden unter schnellem Rühren 3,1 g α,ω-Bis(3-aminopropyl)-polydimethylsiloxan mit einer mittleren Molmasse von 864 g/mol, einem Basen-N-Gehalt von 3,24 %, einer Amin-Funktionalität von ca. 2,0 und einer Viskosität von 12 mPas (20°C) (DMS-All; ABCR bzw. Gelest Inc.), gelöst in 20 g Aceton, zugegeben und 40 Minuten bei 50°C verrührt. Dann werden 7,5 g Triethylamin zugegeben.

Nach 15 min Nachrühren wird die acetonische Prepolymerlösung unter starkem Rühren in 810 g Wasser von 40°C eingetragen. Es bildet sich bei einer Mischtemperatur von 46°C eine Dispersion des Prepolymers.

Sofort danach werden 2,6 g Ethylendiamin und 3,0 g Diethylentriamin, gelöst in 24,4 g Wasser, unter starkem Rühren eingetragen und 15 Minuten stark nachgerührt. Danach wird die Dispersion noch 1 Stunde bei mäßiger Rührleistung und 50°C nachgerührt.

Der Ansatz wird dann bei mäßiger Rührleistung bei vermindertem Druck (ca. 100- 200 mbar) und bei einer Temperatur von 40-60°C destilliert. Die Rohdispersion wird auf Raumtemperatur abgekühlt und durch Zugabe von Wasser auf den gewünschten Feststoffgehalt eingestellt.

Es resultiert eine feinteilige Dispersion mit folgenden Kenndaten:

| | |
|---|---|
| Feststoffgehalt (FK) | 34,5% |
| Mittlere Teilchengröße (LKS) | 85 nm |
| Auslaufzeit (Fordbecher / Düse 4 mm) | 32,5 Sekunden |

### Beispiel 6

Beispiel 1 wurde wiederholt, mit der Änderung, dass ein a,co-Bis(3-aminopropyl)-polydimethylsiloxan mit einer mittleren Molmasse von 886 g/mol, einem Basen-N-Gehalt von 3,16 % (Gehalt an permethylierten Cyclosiloxanen von insgesamt 7 %) eingesetzt wurde.

| | |
|---|---|
| Feststoffgehalt (FK) | 35,6 % |
| Mittlere Teilchengröße (LKS) | ca.100 nm |
| Auslaufzeit (Fordbecher / Düse 4 mm) | 15,5 Sekunden. |

### Anwendungsbeispiele

Soweit nicht anders angegeben, beziehen sich die Mengenangaben (Teile) in den Anwendungsrezepturen auf Gewichtsteile.

### Eingesetzte Materialien

### 1. Grundierung

Als Komponenten für die Grundierungsrezeptur wurden folgende eingesetzt:
1.1 Farbe: Formulierung, enthaltend 26 % Ruß, 0,2 % eines Schichtsilikats, sowie 8,6 % einer mit Ethanolamin neutralisierten Polyacrylsäure.
1.2 Mattiermittel: Formulierung, enthaltend 19 % eines Silicats, 6 % Firnis, sowie 1,5% eines Acrylatverdickers, der mit Ammoniak neutralisiert wurde.
1.3 Antiklebemittelemulsion, enthaltend 2 % Wollfett, 8,5 % Klauenöl, 5 % Kasein, 1,6 % eines Fettalkalkoholgemisches, 1,5 % Paraffinwachs sowie 5 % eines silicatischen Mattiermittel, die mit Ammoniak alkalisch gestellt wurde.
1.4 Acrylatdispersion, 35 %ig mit folgenden Eigenschaften: 100 % Modul: 0,3 MPa, Zugfestigkeit 4,0 MPa bei 880 % Dehnung.
1.5 mittelharte 40 %ige aliphatische Polyurethandispersion mit folgenden Eigenschaften: 100 % Modul: 2,5 MPa, Zugfestigkeit: 20 MPa bei 500 % Dehnung.
1.6 mittelharte 40 %ige aliphatisch-aromatische Polyester-Polyurethan-Dispersion mit folgenden Eigenschaften: 100% Modul: 4,7 MPa, Zugfestigkeit: 32,9 MPa bei 600 % Dehnung.
1.7 Polyurethandispersionen gemäß Beispielen 1 bis **6.**

### 2. Topcoat

Für die Standard-Topcoat-Rezeptur wurden folgende Komponenten eingesetzt:
2.1 150 Teile eines harten Polyacrylat-Binders mit folgenden Filmeigenschaften:
   100%-Modul: 3 MPa, Zugfestigkeit: 20 MPa bei 300 % Dehnung.
2.2 400 Teile einer Mattiermittelformulierung, enthaltend 5,0 % eines Silicat-Mattiermittels, 44 % einer lösemittelfreien hydroxylgruppenhaltigen, weichen Polyurethan-Dispersion, 7 % eines Trennwachses, und mit Ethanolamin neutralisiert
2.3 20 Teile eines siliconhaltigen Griffmittels
2.4 50 Teile Wasser
2.5 20 Teile eines siliconhaltigen Verlaufshilfsmittels
2.6 50 Teile einer handelsüblichen Lösemittel-Formulierung eines Vernetzers, bestehend aus einem Polyether-modifizierten Polyisocyanat-Gemisch auf Basis eines HDI-Trimerisats mit einem NCO-Gehalt von 12,5% und einer NCO-Funktionalität von 2,7.

### 3. Leder-Zurichtung

Für alle Versuche auf Leder wurde ein unzugerichtetes Automobil-Crustleder eingesetzt. Auf dieses Substrat wurde eine Grundierung wie folgt aufgebracht:

Zur Grundierung wird eine Mischung aus Farbe (1.1), einem Mattiermittel (1.2), einem weich stellenden Antiklebemittel (1.3), einem oder mehren einer handelsüblichen weichen Bindern auf Polyacrylat-Basis (1.4), auf Basis einer Polyurethan-Dispersion (1.5), sowie einer PolyurethanDispersion (1.6) oder einer erfindungsgemäßen Polyurethan-Dispersion (1.7) und Wasser hergestellt. Diese Mischung wird zweimal (je ein Kreuz) auf das vorgrundierte Leder gespritzt. Man trocknet 5 min bei 70°C. Das Leder wird hydraulisch geprägt.

Die jeweiligen Prägebedingungen sind in der nachfolgenden Tabelle der Anwendungsbeispiele aufgeführt.

Ein Teil des grundierten Leders wird zur Herstellung von Prüfkörpern zur Beurteilung der Haftungseigenschaften und des Prägeverhaltens verwendet. Das grundierte und geprägte Leder wird mit einem Standard-Topcoat (2.) zugerichtet. Dazu wird die Topcoat-Mischung (ein Kreuz) auf das grundierte Leder gespritzt. Es wurde 5 min bei 80°C im Umlufttrockenschrank zwischengetrocknet. Dann wurde ein weiteres Kreuz des Standard-Topcoats (2.) auf sichtbare Feuchte gespritzt. Man trocknet erneut 5 min bei 80°C. Dann wurde auf der Durchlaufbügelmaschine bei 100°C Walzentemperatur, 50 bar Druck und 6 m pro Minute abgebügelt.

Die physikalischen Lederechtheiten wurden gemäß DIN 53 351 (Knickechtheiten) bzw. DIN 53 399 (Reibechtheiten) ermittelt. Außerdem werden Haftungswerte (Trocken- und Nasshaftung), die Hydrolysebeständigkeit, das Verarbeitungsverhalten bei der Prägung (Klebeneigung an der Prägeplatte) und das optische Prägebild sowie der Prägestand nach dem Bügeln des Topcoats bewertet.

### Legende zur Beurteilung der Leder gemäß Tabellen 1 bis 2

Grad der Beschädigung der Zurichtung bei der angegebenen Anzahl von Trockenknickungen, Naßknickungen, Kälteknickungen.
- o:: keine Beschädigung
- o-x:: sichtbare Veränderung
- x:: leichte Beschädigung
- x-xx:: deutliche Beschädigung
- xx:: sehr starke Beschädigung

- Nassreibungen:: Zahl der Nassreibungen / Grad der Verfärbung des Filzes (5 = keine Verfärbung, sehr gute Echtheit; 1 = starke Verfärbung, sehr schlechte Reibechtheit) / Grad der Beschädigung der Zurichtung.
- Prägebild:: Es wurde der optische Eindruck in Noten 1 bis 8 beschrieben:
1 = sehr natürliches Prägebild, rundes Millkorn, kein Durchschneiden der Reliefstruktur in den Tälern, sehr guter Prägestand nach dem Spritzen des Topcoats und dem abschließenden Bügeln der Zurichtung.
8 = unzureichendes Prägebild, z.B. Durchschneiden der Prägung, scharfer Rand, zu stark strukturierte, unruhige oder auch zu flache Prägung etc., zu starkes Nivellieren des Prägebildes nach der Applikation des Topcoat und nach dem Bügeln der Zurichtung.

### Hydrolysetest:

Beurteilt wird die Stabilität der mechanischen Eigenschaften des Zurichtfilms auf einer Lederprobe nach Lagerung bei 70°C, 98 % relative Luftfeuchtigkeit (14 Tage). Beurteilt werden Zugfestigkeit und Bruchdehnung nach dem Test gegenüber der Vergleichsprobe ohne Alterung. Stabil = keine Verschlechterung der Eigenschaften.

### Haftung::

Die Haftung wird geprüft, indem die Kraft in Newton gemessen wird, die benötigt wird, um einen Klebestreifen von einer zugerichteten Lederprobe abzureißen. Außerdem werden die Lederproben auf Beschädigungen untersucht. Es wird auch beurteilt, an welcher Stelle das Versagen der Zurichtung erfolgt.

In den nachfolgenden Tabellen sind die Einzelheiten der Grundierrezepturen, enthaltend die erfindungsgemäßen Polyurethan-Dispersionen, sowie die Verarbeitungsbedingungen aufgeführt.

**Tabelle 1**

| **Komponente** | **Anwendungs-Beispiel 1** | **Anwendungs-Beispiel 2** | **Anwendungs-Beispiel 3** | **Anwendungs-Beispiel 4** | **Anwendungs-Beispiel 5** |
|---|---|---|---|---|---|
| Farbe 1.1 | 100 | 60 | 60 | 60 | 60 |
| Mattiermittel 1.2 | ---- | 60 | 60 | 60 | ---- |
| Antiklebemittel 1.3 | 200 | 160 | 160 | 160 | 200 |
| Acrylat-Binder 1.4 | ---- | 200 | 200 | 200 | ---- |
| PUR-Binder 1.5 | ---- | ---- | ---- | ---- | 150 |
| Weiche PUR-Disp. 1.6 | ---- | 50 | 50 | 50 | ---- |
| Dispersion aus Beispiel 1 bis 6 (Haftbinder) | 494 (Bsp. 4) | 203 (Bsp. 4) | 200 (Bsp. 6) | 200 (Bsp. 1) | 350 (Bsp. 1) |
| Wasser | 206 | 200 | 200 | 200 | 240 |
| Prägebedingungen | 110°C,220bar, 3s | 80°C,150bar, 2s | 90°C,220bar, 2s | 100°C,220bar, 3s | 100°C,220bar, 3s |
| Prägebild | 5 | 2 | 1 | 3 | 2 |
| Kleben an Prägeplatte | Nein | Nein | Nein | Nein | Nein |
| Haftung trocken Grund [N] | 10 / 11 | n.b. | n.b. | n.b. | n.b. |
| Haftung nass Grund > [N] | 5,2 / 6 | n.b. | n.b. | n.b. | n.b. |
| Haftung trocken Top [N] | > 5 / > 5,2 | > 3,4 / > 4,5 | > 4 / > 5 | 6,8 / 7,5 | 5,3 / 8 |
| Haftung nass Top [N] | 7 / 7,4 | 3,5 / 3 | > 2,5 / > 2,5 | 3,4 / 4,2 | 5/5 |
| Beobachtungen beim Spritzen | sehr guter Verlauf | sehr guter Verlauf | sehr guter Verlauf | sehr guter Verlauf | sehr guter Verlauf |
| Knickungen trocken | 100000 o | 100000 o | 100000 o | 100000 o | 100000 o |
| Knickungen nass | 20000 o | 20000 o | 20000 o | 20000 o | 20000 o |
| Hydrolysetest | Stabil | stabil | stabil | stabil | stabil |
| Nassreibung | 1000 5 o | 1000 5 x | 1000 5 o | 1000 5 o | 1000 5 o |
| Härte Shore A (Film Haftbinder) | 51 | 51 | 37 | 45 | 45 |
| Dehnung: maximal / nach 60 s Relaxtion [%] (Film Haftbinder) | 900 / 120 | 900 / 120 | > 1100 / 138 | 1075 / 130 | 1025 / 138 |

**Tabelle 2**

| **Komponente** | **Anwendungs- Beispiel 6** | **Anwendungs- Beispiel 7** |
|---|---|---|
| Farbe 1.1 | 100 (DB) | 100 (DB) |
| Mattiermittel 1.2 | ---- | ---- |
| Antiklebemittel 1.3 | 200 | 200 |
| Acrylat-Binder 1.4 | ---- | ---- |
| PUR-Binder 1.5 | 150 | 150 |
| Weiche PUR-Disp. 1.6 | ---- | ---- |
| Dispersion aus Beispiel 1 bis 6 (Haftbinder) | 337 (Bsp. 3) | 355 (Bsp. 5) |
| Wasser | 213 | 195 |
| Prägebedingungen | 100°C/220bar/ 2s | 100°C/220bar/ 2s |
| Prägebild | 2 | 5 |
| Kleben an Prägeplatte | Nein | Nein |
| Haftung trocken Grund [N] | 8,3 | 9,5 / 10 |
| Haftung nass Grund [N] | 4,5 / 5 | 4,5 / 4 |
| Haftung trocken Top [N] | 8,3 / 7,6 | 4/8 |
| Haftung nass Top [N] | 3,2 / 4,0 | 6,5 / 7 |
| Beobachtung beim Spritzen | Guter Verlauf | Sehr guter Verlauf |
| Knickungen trocken | 100000 o | 100000 o |
| Knickungen nass | 20000 o | 20000 o |
| Hydrolysetest | Stabil | Stabil |
| Nassreibung | 1000 5 o | 1000 5 x |
| Härte Shore A (Film Haftbinder) | 40 | 36 |
| Dehnung: maximal / nach 60 s Relaxtion [%](Film Haftbinder) | > 1100/ 170 | 1025 / 150 |

Man erkennt aus den Tabellen, dass in der Regel Leder mit folgenden Echtheiten resultieren:
- Nassreibungen:: >1 000 ohne Beschädigung; Trocken- und Nassknickungen mit 10⁶ bzw. 2x10⁵ ohne Beanstandung; Kälteknickungen (-20°C) mit 30000 ohne Beschädigung.

## Patentansprüche

1. Polyurethan, das erhalten wird durch Umsetzung von
a) einem NCO-haltigen Prepolymer, aufgebaut aus
a1) wenigstens einem Polyesterpolyol, vorzugsweise Polycarbonatpolyol, carbonatgruppen-freies Polyesterpolyol, Polyestercarbonatpolyol, Polyesteramidpolyol, insbesondere Polyesterdiol, mit einem mittleren als Zahlenmittel bestimmten Molekulargewicht von größer gleich 500 g/mol, vorzugsweise von 500 bis 6000 g/mol, insbesondere von 500 bis 4000 g/mol, ganz besonders bevorzugt von 800 bis 4000 g/mol, und
a2) wenigstens einem von a1) verschiedenen Estergruppen-freien Polyetherpolyol, vorzugsweise Polyalkylenglykol wie Polyethylenglykol, Polypropylenglykol, Polytetramethylenglykol, Polyhexamethylenglykol sowie Mischpolyether, insbesondere solche enthaltend Bausteine aus der Gruppe Ethylenoxi, Propylenoxi, Tetramethylenoxi und/oder Hexamethylenoxi, mit einem als Zahlenmittel bestimmten Molekulargewicht von größer gleich 500, vorzugsweise von 500 bis 10 000 g/mol, insbesondere von 500 bis 4 000, besonders bevorzugt von 800 bis 4 000 g/mol, vorzugsweise ein Polyetherdiol und
a3) wenigstens einem Polyol, insbesondere Diol, mit einem Molekulargewicht von kleiner 500 g/mol, das eine oder mehrere ionische Gruppen und/oder eine oder mehrere potentiell ionische Gruppen trägt, vorzugsweise eine oder mehrere Carboxylatgruppen trägt und
a4) wenigstens einem aliphatischen Polyisocyanat, vorzugsweise Diisocyanat, vorzugsweise mit einem Molgewicht kleiner 500 g/mol, insbesondere von 112 bis 400 g/mol, besonders bevorzugt 168 bis 262 g/mol und
a5) gegebenenfalls ein nicht-ionisches, vorzugsweise Polyol, vorzugsweise Diol mit einem Molekulargewicht von kleiner 500 g/mol, vorzugsweise von 61 bis 499 g/mol, und
a6) gegebenenfalls einem Monoalkohol
mit
b) wenigstens einem gegenüber NCO-Gruppen reaktiven Polysiloxan mit einem als Zahlenmittel bestimmten Molgewicht von kleiner 1500 g/mol, vorzugsweise mit 1 bis 6, insbesondere 1 bis 3 gegenüber NCO-Gruppen reaktiven Amino- und/oder Hydroxylgruppen, insbesondere Aminogruppen und
c) wenigstens einem gegenüber NCO-Gruppen reaktiven Amin mit einer mittleren Amino-Funktionalität von 1 bis 6 und einem Molgewicht von kleiner 500 g/mol (als Zahlenmittel bestimmtes Molgewicht) das durch Hydroxylgruppen und/oder Sulfogruppen und/oder Carboxylgruppen substituiert sein kann und
d) Wasser,
wobei das Molverhältnis der zur Herstellung von dem Prepolymeren a) eingesetzten Hydroxy-funktionellen Verbindungen zum Polyisocyanat 1:1,1 bis 1:2,5, vorzugsweise 1,1;1 bis 1:1,7 beträgt.

2. Polyurethan gemäß Anspruch 1, **dadurch gekennzeichnet, dass** die mittlere Teilchengröße des Polyurethans kleiner als 200 nm, vorzugsweise 20 bis 150 nm, insbesondere 40 bis 100 nm ist.

3. Polyurethan gemäß wenigstens einem der Ansprüche 1 oder 2, **dadurch gekennzeichnet, dass** das Polyurethan einen Gehalt an Silicon von 0,0001 bis 10 %, bevorzugt 0,001 bis 2,5 %, besonders bevorzugt 0,001 bis 1 %, jeweils bezogen auf Festgehalt, aufweist.

4. Polyurethan gemäß wenigstens einem der Ansprüche 1 bis 3, **dadurch gekennzeichnet, dass** das Polysiloxan vollständig in das Polyurethan eingebaut ist.

5. Wässrige Dispersionen enthaltend wenigstens ein Polyurethan nach mindestens einem der Ansprüche 1 bis 4.

6. Verfahren zur Herstellung des Polyurethans gemäß wenigstens einem der Ansprüche 1 bis 4, **dadurch gekennzeichnet, dass** man die Komponenten a1) bis a4) und gegebenenfalls a5) und/oder a6) zu einem NCO-Prepolymeren umsetzt, dieses anschließend mit der Siliconkomponente b) umsetzt, dann die gegebenenfalls vorhandenen potentiell ionischen Gruppen, insbesondere Carbonsäuregruppen mit einer gegenüber NCO-Gruppen nicht reaktiven Base neutralisiert und dieses neutralisierte Prepolymer mit der Komponente c) und Wasser zu einem Polyurethan umsetzt.

7. Polyurethansystem enthaltend die Komponente A) und wenigstens eine der Komponenten A1) und B)
A) wenigstens ein Polyurethan gemäß wenigstens einem der Ansprüche 1 bis 4 oder eine Polyurethandispersion gemäß Anspruch 5,
A1) gegebenenfalls eine oder mehrere weitere Polymerdispersionen wie Polyacrylatdispersionen oder Polyurethandispersionen und
B) gegebenenfalls ein wasserdispergierbares, aliphatisches oder cycloaliphatisches Polyisocyanat mit einer NCO-Funktionalität von wenigstens 2, vorzugsweise 2 bis 6, insbesondere 2,3 bis 4.

8. Verwendung des Polyurethans gemäß wenigstens einem der Ansprüche 1 bis 4, der wässrigen Polyurethandispersion gemäß Anspruch 5 oder des Polyurethansystems gemäß Anspruch 7, zur Beschichtung von verschiedenen Substraten, insbesondere Holz, Metall, Textil, Papier, Kunststoff und Leder.

9. Mit dem Polyurethan gemäß wenigstens einem der Ansprüche 1 bis 4, der wässrigen Polyurethandispersion gemäß Anspruch 5 oder dem Polyurethansystem gemäß Anspruch 7 beschichtete Substrate, insbesondere Holz, Metall, Textil, Papier, Kunststoff und Leder.

10. Verfahren zum Beschichten von Substraten, **dadurch gekennzeichnet, dass** man Polyurethanen gemäß einem der Ansprüche oder das Polyurethansystem gemäß Anspruch 7 auf Substrate aufträgt.

11. Substrate, beschichtet mit wenigstens einem Polyurethan gemäß einem der Ansprüche 1 bis 4, wässrige Polyurethandispersionen gemäß Anspruch 5 oder dem Polyurethansystem gemäß Anspruch 7.
